# EUROPÄISCHE PATENTSCHRIFT

(11) **EP 1 149 782 B1**
(45) Veröffentlichungstag und Bekanntmachung des Hinweises auf die Patenterteilung: **11.12.2002**
(21) Anmeldenummer: 01108660.0
(22) Anmeldetag: 06.04.2001
(51) Int. Cl.: B65G 47/71

(54) **Verfahren zum Betrieb einer Rangiereinheit einer Transportvorrichtung für Schneidgutportionen eines Lebensmittels und Rangiereinheit**
Method for the use of a distributing device of a conveyor for sliced foodstuffs and distributing device
Méthode pour l'utilisation d'un dispositif de répartition d'un convoyeur pour des aliments coupés en tranches et dispositif de répartition

(30) Priorität: 14.04.2000 DE 10018568
(43) Veröffentlichungstag der Anmeldung: 31.10.2001
(73) Patentinhaber: Reifenhäuser, Uwe, Dipl.-Ing., 57632 Flammersfeld (DE)
(72) Erfinder: Reifenhäuser, Uwe, Dipl.-Ing., 57632 Flammersfeld (DE)
(74) Vertreter: Bauer, Dirk, Dipl.-Ing. Dipl.-Kfm.

(56) Entgegenhaltungen:
- EP-A- 0 274 229
- EP-A- 0 508 304
- WO-A-89/10318
- DE-A- 19 617 187

## Beschreibung

Die Erfindung betrifft ein Verfahren zum Betrieb einer Rangiereinheit einer Transportvorrichtung für Schneidgutportionen eines Lebensmittels, die von in Transportrichtung vorgelagerten und nachgelagerten Fördermitteln an die Rangiereinheit übergeben und von dieser weg geführt werden, wobei die Rangiereinheit eine Mehrzahl von parallel nebeneinander verlaufenden Bahnen aufweist, die jeweils von mindestens einem über Umlenkwalzen geführten Zugmittel gebildet sind, und wobei jede Bahn von mindestens einer separaten Antriebsrichtung angetrieben wird. Des weiteren betrifft die Erfindung eine Rangiereinheit einer Transportvorrichtung für Schneidgutportionen eines Lebensmittels, mit der das vorgenannte Verfahren ausführbar ist.

Verfahren der vorgenannten Art sind allgemein bekannt, siehe z.B. EP-A-0 274 229, und werden insbesondere bei Aufschnittlinien, beispielsweise für Wurstwaren oder Käse, angewendet. Eine derartige Aufschnittlinie besteht aus einer Schneidvorrichtung, mit der das Lebensmittel in Form eines oder mehrerer Gutsstränge zugeführt wird. Mit Hilfe eines Abschneidemessers werden Scheiben von dem Lebensmittel abgeschnitten und auf ein Förderband übergeben. Die Ablage der einzelnen Scheiben erfolgt entweder stapelförmig oder geschindelt bzw. geschuppt, wobei mit Hilfe einer Wägeeinrichtung die Erzeugung von gleichgewichtigen Schneidgutportionen überwacht wird.

Im weiteren Verlauf des Förderbandes ist eine Weiche eingerichtet, mit der die beispielsweise eine Reihe der Schneidgutportionen abwechselnd auf die linke bzw. rechte Hälfte einer nachgeschalteten Rangiereinheit verteilt wird. Eine derartige Anordnung der Schneidgutportionen ist dann erforderlich, wenn diese in einer nachfolgenden Verpackungsmaschine zweireihig verpackt werden sollen. Die Verpackungsmaschinen derartiger Aufschnittlinien sind in der Regel so gestaltet, daß beispielsweise zwei nebeneinander angeordnete Schneidgutportionen in eine darin angepaßte, geprägte Kunststofform aus einer Unterfolie eingelegt werden, wobei nach dem Einlegen in die Schalen ein Zuschweißen der Packungen mit Hilfe einer Oberfolie erfolgt. Anschließend werden die endlos aneinander hängenden Packungen mit Hilfe von Schneidvorrichtungen voneinander zu Einzelpackungen getrennt.

Eine Rangiereinheit hat in einer derartigen Aufschnittlinie die Funktion, die Zahl der nebeneinander angeordneten Schneidgutportionen, wie sie bei einem Abschneidevorgang von der Schneidvorrichtung erzeugt werden, an die Zahl der Portionen anzupassen, die nebeneinander in einer Schale einer späteren Verpackung angeordnet sein sollen. Typischerweise werden bei einem Abschneidevorgang in der Schneidvorrichtung von einem, zwei, drei oder vier nebeneinander angeordneten Gutssträngen gleichzeitig jeweils eine Scheibe angeschnitten. Die Produktverpackungen weisen typischerweise ebenfalls einen, zwei, drei oder vier nebeneinander angeordnete Portionsstapel auf. Die Rangiereinheit hat die Aufgabe, die Zahl der Reihen, wie sie von der Schneidvorrichtung erzeugt werden, an die Zahl der Reihen anzupassen, wie sie in den fertigen Produktverpackungen vorhanden ist. Wird beispielsweise zweireihig abgeschnitten und soll eine Verpackung drei Schneidgutportionen nebeneinander aufweisen, d.h. eine dreireihige Verpackung stattfinden, so ist es Aufgabe der Rangiereinheit, die zweireihig ankommenden Schneidgutportionen so zu sortieren und zwischenzupuffern, daß eine getaktete dreireihige Abgabe an die nachfolgende, zum Verpackungsabschnitt der Aufschnittlinie führenden Transporteinrichtung erfolgen kann.

Im beschriebenen Fall weist die Rangiereinheit drei voneinander unabhängige, parallel zueinander angeordnete Bahnen auf, die jeweils von einer separaten Antriebseinrichtung antreibbar sind. Die von der Schneidvorrichtung kommenden, nebeneinander angeordneten Schneidgutstapel sind mit Hilfe einer Weiche rechtwinklig zur Transportrichtung versetzbar, wobei wahlweise eine Übergabe von einer der ankommenden Portionsbahnen auf eine äußere oder eine mittlere Bahn der Rangiereinheit möglich ist. Ein Querversatz der beiden Bahnen der Weiche ist - unabhängig voneinander - deshalb möglich, weil die Bahnen aus einer Vielzahl von schmalen Bändchen gebildet sind, die in Umlenk- bzw. Antriebswalzen gelagert sind, die an den Bändchenquerschnitt angepaßte Nuten aufweisen. Aufgrund der Elastizität der Bändchen läßt sich ein Querversatz der Weichenbahnen auf einfache Weise dadurch erzielen, daß die an die Rangiereinheit angrenzende Umlenkwalze der Weiche in Achsrichtung verschiebbar ist, wodurch ein leichtes Abknicken der Bändchen beim Verlassen der Walzen erfolgt.

Ein Nachteil der bekannten Rangiereinheiten ist darin zu sehen, daß diese mit erheblichem Aufwand umgerüstet werden müssen, wenn ein Wechsel in der Anzahl der gleichzeitig abgeschnittenen Produktscheiben bzw. ein Wechsel in der Anzahl der in der Verpackung nebeneinander angeordneten Produktstapel durchgeführt werden soll. In diesem Fall ist es nämlich nötig, anstelle von beispielsweise drei unabhängig voneinander antreibbaren Bahnen der Rangiereinheit derer zwei oder vier vorzusehen, wozu die Umlenk- bzw. Antriebswalzen ausgewechselt werden müssen. Jeder Wechsel im Verpackungs- bzw. Schneidbild verursacht daher einen erheblichen Umrüstungsaufwand, der mit hohen Kosten einhergeht. Außerdem ist eine derartige Umrüstung lediglich von Fachpersonal des Herstellers derartiger Rangiereinheiten durchführbar, wodurch die Flexibilität des Nutzers derartiger Aufschnittlinien, beispielsweise zum raschen Wechsel zwischen mehreren Verpackungsanordnungen, stark eingeschränkt wird.

Der Erfindung liegt die Aufgabe zugrunde, ein Verfahren zum Betrieb einer Rangiereinheit vorzuschlagen, bei der eine Anpassung an eine Veränderung der Anzahl der abgeschnitten Schneidgutscheiben bzw. der in einer Verpackung nebeneinander angeordneten Portionsstapel mit möglichst geringem Aufwand erfolgen kann. Gleichzeitig soll eine Rangiereinheit vorgeschlagen werden, mit der sich ein derartiges Verfahren einfach durchführen läßt.

Ausgehend von dem Verfahren der eingangs beschriebenen Art, wird diese Aufgabe erfindungsgemäß dadurch gelöst, daß eine Schneidgutportion von mindestens zwei Bahnen gleichzeitig transportiert wird.

Eine derartige Vorgehensweise ermöglicht es, die Rangiereinheit in derart viele, parallel zueinander angeordnete Bahnen zu unterteilen, wie maximal Schneidgutportionen nebeneinander in einer Verpackung angeordnet sein sollen. Jede dieser Bahnen muß einen eigenen Antrieb besitzen, der unabhängig von den Antrieben der übrigen Bahnen ansteuerbar ist.

Werden bei dem erfindungsgemäßen Verfahren ebenso viele Portionen nebeneinander in einer Verpackung angeordnet, wie Bahnen insgesamt nebeneinander in der Rangiereinheit vorhanden sind, so erfolgt beispielsweise im Falle einer einreihigen Anlieferung der Schneidgutportionen von der Schneidvorrichtung der Antrieb jeder einzelnen der Bahnen bei der Aufnahme der Portionen unabhängig von den anderen Bahnen.

Wird jedoch beispielsweise nur eine Anzahl von Portionsstapeln nebeneinander angestrebt, die der halben Anzahl der Bahnen der Rangiereinheit entspricht, so werden jeweils zwei benachbarte Bahnen synchron zueinander angetrieben, wodurch eine virtuelle Halbierung der voneinander unabhängigen Bahnen erfolgt. Beispielsweise kann eine Halbierung der Bahnanzahl durch eine Zwangskopplung benachbarter Bahnen erfolgen, die entweder auf mechanischem Wege mittels eines Kopplungselements oder auf steuerungstechnischem Wege durch entsprechend parallele Ansteuerung benachbarter Bahnen erfolgen kann.

Durch die erfindungsgemäße Verfahrensweise wird beispielsweise der Austausch einer Umlenkwalze für eine breite Bahn gegen zwei Umlenkwalzen für entsprechend schmalere Bahnen überflüssig, da die Synchronisierung benachbarter Bahnen rein auf steuerungstechnischem Wege, d.h. bei computergesteuerten Aufschnittlinien allein durch eine entsprechende Software, erfolgt. Auch die Aufhebung der Synchronisation erfolgt in diesem Falle rein softwaremäßig. Hierdurch können die Kosten für einen Wechsel des Verpackungsbildes sowie der hierfür erforderliche Zeitaufwand drastisch reduziert werden. Auch ist kein Spezialpersonal erforderlich, das auf einen hardwaremäßigen Umbau der Rangiereinheit spezialisiert ist und typischerweise vom Hersteller derartiger Rangiereinheiten beigestellt werden muß.

Gemäß einer Ausgestaltung der Erfindung ist vorgesehen, daß die Geschwindigkeit jeder Bahn unabhängig geregelt wird.

Um beispielsweise leichte Fehler in der Ausrichtung eines länglichen Produktstapels ausgleichen zu können, ist es sinnvoll, daß die Geschwindigkeiten benachbarter Bahnen, mit denen gemeinsam dieselbe Schneidgutportion transportiert wird, zumindest temporär unterschiedlich groß sind, wodurch eine bewußte Veränderung der Ausrichtung, d.h. Verdrehung, eines Schneidgutstapels erreicht werden kann.

Eine Rangiereinheit einer Transportvorrichtung für Schneidgutportionen eines Lebensmittels weist eine Mehrzahl von parallel nebeneinander verlaufenden Bahnen auf, die jeweils von mindestens einem über Umlenkwalzen geführten Zugmittel gebildet sind und jeweils einerseits von einem in Transportrichtung der Rangiereinheit vorgelagerten Fördermittel mit Schneidgutportionen beschickbar sind, die andererseits an ein nachgelagertes Fördermittel abgebbar sind, wobei jede Bahn von einer separaten Antriebseinrichtung antreibbar ist, und ist erfindungsgemäß dadurch gekennzeichnet, daß vier Bahnen vorhanden sind, von denen die beiden mittleren Bahnen jeweils eine Breite aufweisen, die der halben Breite der beiden äußeren Bahnen entspricht.

Eine derartige Aufteilung der Gesamtbreite der Rangiereinheit auf die vier Bahnen erlaubt in sehr vorteilhafter Weise auch ein Verpacken von drei Schneidgutportionen nebeneinander, wozu ein unabhängiger Antrieb von drei Bahnen erforderlich ist. In diesem Fall werden die beiden mittleren Bahnen zwangssynchronisiert, wodurch sich drei in ihrer Breite identische Einzelbahnen ergeben. Soll hingegen zweireihig bzw. vierreihig verpackt werden, so werden jeweils eine äußere und die benachbarte mittlere Bahn synchron betrieben, wodurch sich zwei gleich breite Bahnen ergeben, die die Hälfte der Gesamtbreite der Rangiereinheit ausmachen. Jede dieser beiden Bahnen kann gleichzeitig mit zwei kleineren oder vier einem größeren Schneidgutstapel beschickt werden. Theoretisch ist auch der unabhängige Betrieb aller vier Bahnen möglich, wobei in diesem Fall die mittleren Bahnen jedoch nur ungefähr die halbe Breite der beiden äußeren Bahnen aufweisen.

Gemäß einer Ausgestaltung der erfindungsgemäßen Rangiereinheit ist vorgesehen, daß Antriebswalzen jeweils einer äußeren Bahn und der benachbarten mittleren Bahn koaxial zueinander angeordnet sind. Vorteilhafterweise ist dabei eine Antriebswelle einer Antriebswalze einer mittleren Bahn durch die hohl ausgeführte Antriebswalze der benachbarten äußeren Bahn geführt. Mit Hilfe eines derartigen Hohlwellenprinzips lassen sich benachbarte Bahnen an miteinander fluchtenden Stellen mit ihrem Antrieb versehen.

Eine zu bevorzugende Antriebsform für die Bahnen besteht darin, daß eine hohl ausgeführte Antriebswalze und eine durch diese geführte Antriebswelle jeweils mit einer Riemenscheibe für einen von einem Servomotor angetriebenen Flachriemen versehen ist. Mit Hilfe derartiger Servomotoren lassen sich die einzelnen Bahnen extrem präzise ansteuern. Der Gleichlauf benachbarter Bahnen kann daher extrem gut sein. Die Gefahr unbeabsichtigter Verdrehungen von Schneidgutstapeln im Verlauf ihres Transports durch die Rangiereinheit ist hierdurch praktisch ausgeschlossen. Dies ist nicht zuletzt auch auf die Verwendung von Servomotoren zurückzuführen, mit denen sich sehr geringe Drehzahlabweichungen realisieren lassen.

Um den benötigten Bauraum für die Motoren zu schaffen, wird nach der Erfindung noch vorgeschlagen, daß die hohl ausgeführten Antriebswalzen in horizontale Richtung versetzt zueinander angeordnet sind und sich die Servomotoren alle auf derselben Seite der Rangiereinheit befinden.

Wenn die Servomotoren, die auf koaxial zueinander angeordnete Riemenscheiben wirken, jeweils vertikal übereinander angeordnet sind, kann eine Motoranordnung ungefähr auf den Eckpunkten eines Quadrats gewählt werden.

Bei einer bevorzugten Ausführungsform der erfindungsgemäßen Rangiereinheit besteht jede Bahn aus einer Mehrzahl von parallel zueinander verlaufenden und äquidistant zueinander angeordneten Bändchen oder Riemchen. In diesem Fall ist es möglich, jede Bahn aus zwei in Transportrichtung hintereinander angeordneten Abschnitten aufzubauen, die jeweils von einer gemeinsamen Antriebswalze antreibbar sind und wobei auf der Antriebsseite jeweils abwechselnd ein Bändchen eines ersten Abschnitts und ein Bändchen eines zweiten Abschnitts angeordnet ist. Ein Spalt zwischen den Abschnitten wird hierdurch vermieden. Auf diese Weise lassen sich die Antriebswalzen - in Transportrichtung der Rangiereinheit betrachtet - in deren Mittelbereich plazieren, wobei aufgrund der Aufteilung in zwei Abschnitte für jeden Abschnitt im Bereich der Antriebswalze ein hinreichend großer Umschlingungswinkel gegeben ist, so daß eine problemlose Krafteinleitung über eine Reibschlußverbindung möglich ist. Die mittige Anordnung der Antriebswalzen bietet den Vorteil, daß hinreichend Raum für die Anordnung der Antriebsmotoren besteht, ohne daß diese über die Länge der Rangiereinheit vorstehen würden.

Das erfindungsgemäße Verfahren wird nachfolgend anhand eines Ausführungsbeispiels einer Rangiereinheit nach der Erfindung, die in der Zeichnung dargestellt ist, näher erläutert. Es zeigt:
- Fig. 1: eine Vorderansicht einer Transportvorrichtung als Teileiner Aufschnittlinie;
- Fig. 2: eine Draufsicht auf die Transportvorrichtung gemäß Fig. 1;
- Fig. 3a bis 3c: wie Fig. 2, jedoch in unterschiedlichen Stellungen einer Weiche;
- Fig. 4: eine perspektivische Ansicht einer Rangiereinheit;
- Fig. 5: eine Draufsicht auf die Rangiereinheit gemäß Fig. 4;
- Fig. 6: eine Seitenansicht der Rangiereinheit gemäß Fig. 4 und

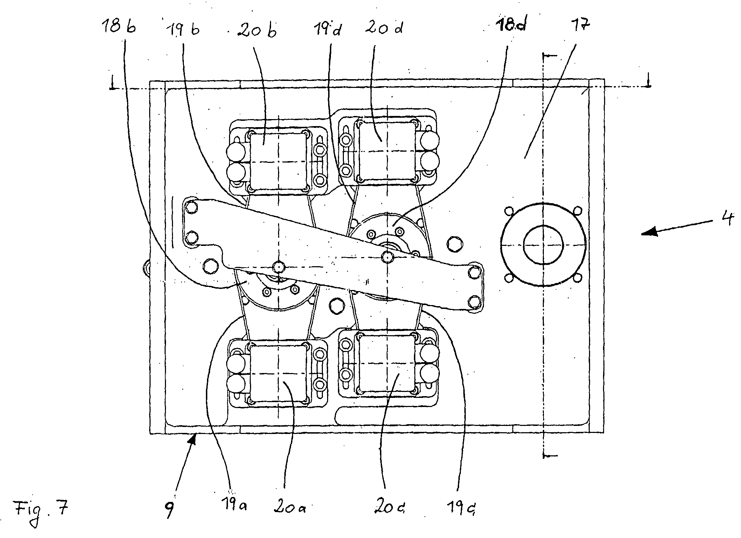

- Fig. 7: eine Rückansicht der Rangiereinheit gemäß Fig. 4.

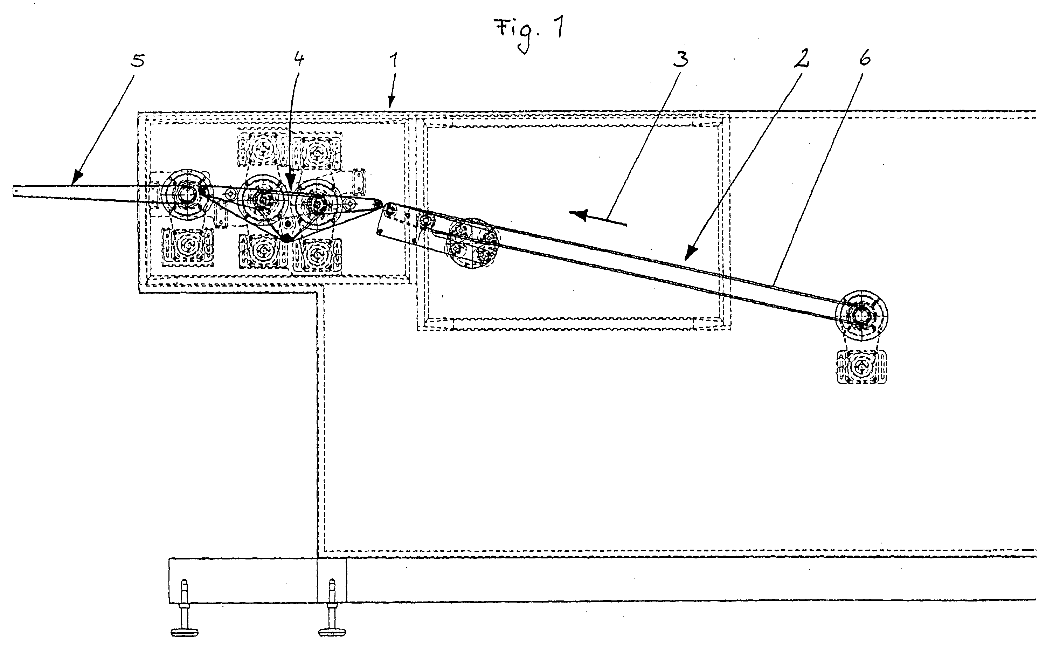

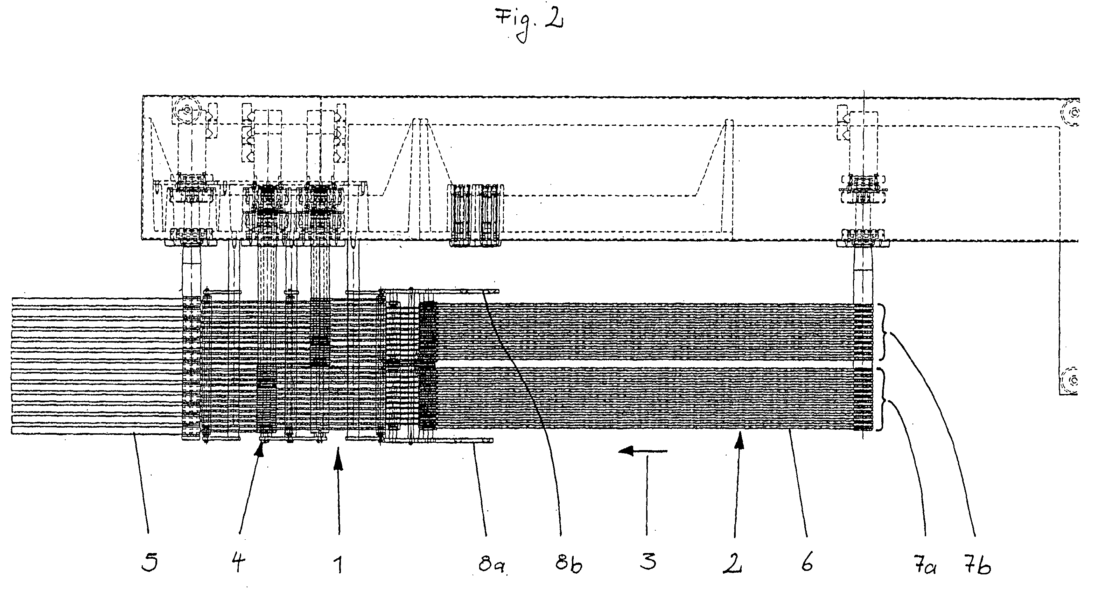

Eine in den Fig. 1 und 2 insgesamt mit 1 bezeichnete Transporteinrichtung bildet einen Teil einer sogenannten Aufschnittlinie, die eine Schneideinrichtung zum Schneiden von Lebensmitteln in Scheiben, eine Wägeeinrichtung zum Abwiegen von Scheibenportionen, Transportbänder zum Transport der Schneidgutportionen (vorgenannte Komponenten nicht dargestellt) enthält. Die Aufschnittlinie weist des weiteren eine als Förderband ausgebildete Weiche 2 auf, die in Transportrichtung (Pfeil 3) einer Rangiereinheit 4 vorgeschaltet ist. An die Rangiereinheit 4 schließt sich ein weiteres Förderband 5 an, mit dem die Schneidgutportionen in einen verpackungstechnischen Teil der Aufschnittlinie überführt werden. Dort werden die Portionen in vorgeformte geprägte Schalen aus Kunststoffunterfolie eingelegt und anschließend mit einer Deckfolie unter Luftabschluß oder unter einer Schutzatmosphäre verschlossen. Die Schalen und die Deckfolie werden aus rollenförmigem Material in der Breite der Rangiereinheit 4 bzw. des Förderbandes 5 gebildet und werden nach dem Einschweißen der Lebensmittelportionen zu einzelnen Packungen auseinandergeschnitten.

Die Rangiereinheit 4 hat die Aufgabe, die von der Schneideinrichtung kommenden Schneidgutportionen erforderlichenfalls in ihrer Anordnung so zu verändern, daß sie mit der gewünschten Anordnung in der Endverpackung übereinstimmt. Werden beispielsweise mit Hilfe der Schneideinrichtung von zwei nebeneinander in dem Produktschacht angeordneten Gutssträngen immer zwei Scheiben gleichzeitig abgeschnitten, so bilden sich auf dem Ablagetisch der Schneideinrichtung zwei nebeneinander angeordnete Scheibenstapel bzw. geschindelte Scheibenanordnungen aus. Sollen in diesem Fall jedoch drei derartige Stapel oder Schindelanordnungen nebeneinander in eine entsprechende Kunststoffschale eingelegt und verpackt werden, so kommt der Rangiereinheit 4 die Aufgabe zu, einen zweireihigen Produktstrom in einen dreireihigen umzuformen.

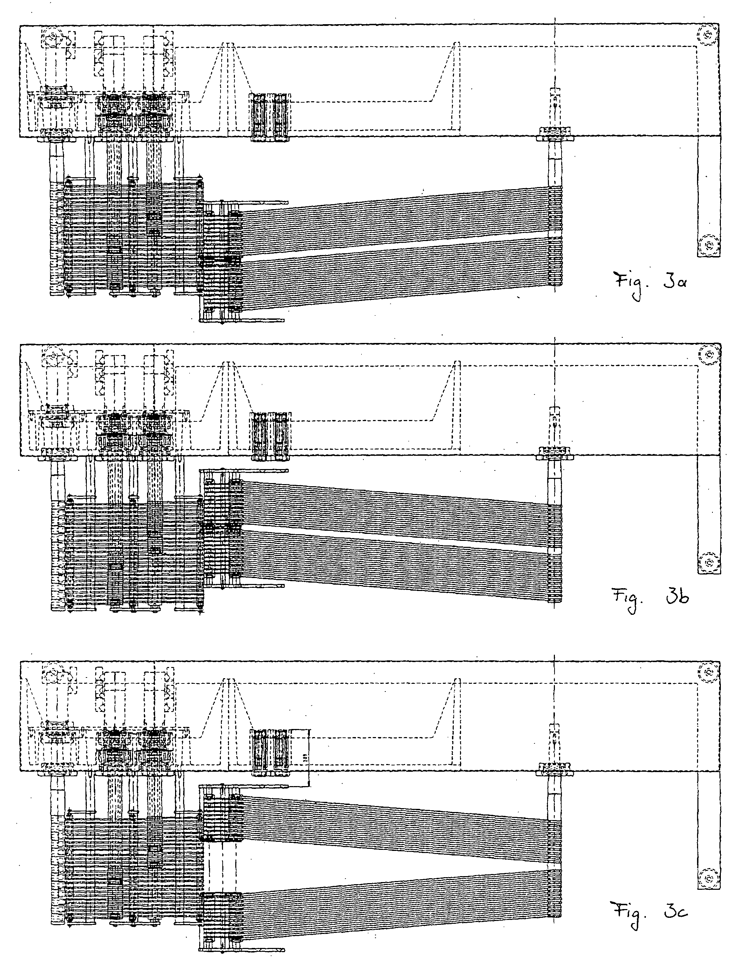

Zu diesem Zweck ist die der Rangiereinheit 4 vorgeschaltete Weiche 2 aus zwei parallel zueinander verlaufenden und jeweils aus einer Vielzahl von einzelnen Bändchen 6 bestehenden Bahnen 7a und 7b zusammengesetzt. Die der Rangiereinheit 4 zugeordneten Enden beider Bahnen 7a und 7b sind unabhängig voneinander jeweils mit Hilfe eines Schlittens 8a und 8b senkrecht zur Längsachse der Transporteinrichtung 1 verstellbar. Auf diese Weise ist es möglich, beispielsweise die in drei Bahnen unterteilte Rangiereinheit 4 so mit Schneidgutportionen zu beschicken, daß diese mittig auf die jeweils zu beaufschlagende Bahn auftreffen. In diesem Zusammenhang verdeutlichen die Fig. 3a bis 3c neben der Grundstellung gemäß Fig. 2 drei weitere Stellungen der Weiche 2 mit ihren beiden Bahnen 7a und 7b. Aufgrund der Elastizität der aus einem gummiartigen Kunststoffmaterial bestehenden Bändchen 6 ist ein Querversatz der Bahnen 7a und 7b der Weiche 2 unter Beibehaltung der senkrechten Ausrichtung der jeweiligen Umlenkwalzen für die Bändchen 6 und unter Beibehaltung deren Achsabstands durch einfache Querverschiebung jeweils einer Umlenkwalze möglich, wobei zum einen eine gewisse Längenänderung der Bändchen 6 eintritt und zum anderen eine gewisse Abknickung im Anschluß an die in den Umlenkwalzen vorhandenen Aufnahmenuten für die Bändchen 6 stattfindet.

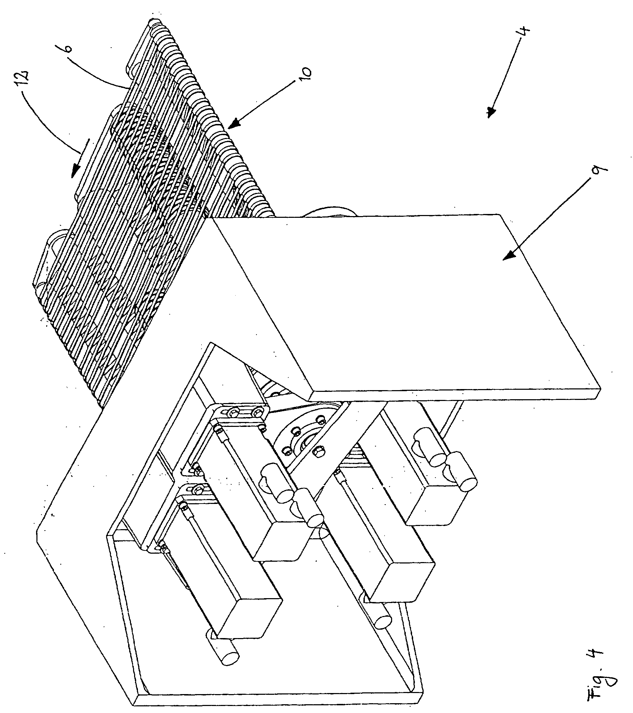

Aus den Fig. 4 bis 6 läßt sich der Aufbau der Rangiereinheit 4 im einzelnen entnehmen. Die Rangiereinheit 4 besteht aus einem Antriebsteil 9 und einem Transportteil 10, dessen Oberfläche 11 von einer Vielzahl von Bändchen 6 gebildet wird. Nach dem Prinzip eines Förderbandes ist hiermit ein Transport von Schneidgutportionen in Richtung des Pfeils 12 möglich. Das Transportteil 10 ist in vier parallel zueinander verlaufende und nebeneinander angeordnete Bahnen 13a bis 13d unterteilt, die jeweils unabhängig voneinander antreibbar sind. Jede dieser Bahnen ist in Transportrichtung gesehen in einen vorderen Abschnitt 13a/I bis 13d/I und einen hinteren Abschnitt 13a/II bis 13d/II unterteilt. Während im Fall der Bahnen 13a und 13b die vorderen Abschnitte 13a/I und 13b/I eine größere Länge besitzen als die jeweils hinteren Abschnitte 13a/II und 13b/II, ist dies bei den Bahnen 13c und 13d genau andersherum.

Der Antrieb der vorderen und der hinteren Abschnitte jeder Bahn 13a bis 13d erfolgt mit Hilfe jeweils derselben Antriebswalze 14a bis 14c, deren Breite der Breite 15a bis 15d der jeweiligen Bahn 13a bis 13d entspricht. In jeder der Antriebswalzen 14a bis 14d sind abwechselnd Nuten für die Bändchen 6 der vorderen und der hinteren Abschnitte nebeneinander positioniert. Aus diesem Grunde ist die horizontale Dichte der Bändchen im Bereich der Umlenkwalzen 14a bis 14d doppelt so groß wie im übrigen Bereich der Oberfläche 11 des Transportteils 10 der Rangiereinheit 4.

Der Antrieb der Antriebswalzen 14a und 14c erfolgt mit Hilfe der einen leichten Höhenversatz aufweisenden Antriebswellen 16a und 16c, die jeweils als Hohlwellen ausgeführt sind, in deren Inneren die in den Figuren nicht sichtbaren Antriebswellen für die koaxial hierzu ausgerichteten Antriebswalzen 14b und 14d verlaufen.

Auf der Antriebswelle 16a ist im Anschluß an eine Wand 17 im Inneren eines Gehäuses 9 eine Riemenscheibe 18a montiert, die über einen Riemen 19a von einem Antriebsmotor 20a, bei dem es sich um einen Servomotor handelt, antreibbar ist. Die Welle für die Umlenkwalze 14b ist durch die Riemenscheibe 18a hindurchgeführt und trägt an ihrem Ende eine Riemenscheibe 18b, die mittels eines Riemens 19b von einem Antriebsmotor 20b antreibbar ist. Auf diese Weise ergibt sich eine Anordnung der Antriebsmotoren 20a bis 20d, bei der deren Drehachsen ungefähr die Eckpunkte eines Rechtecks markieren. Der leichte Versatz in der Höhe der Drehachsen der hohlen Antriebswellen 16a und 16c ergibt sich aus dem leicht geneigten Verlauf der Oberfläche 11 des Transportteils 10 der Rangiereinheit 4, die sich der Vorderansicht gemäß Fig. 1 entnehmen läßt.

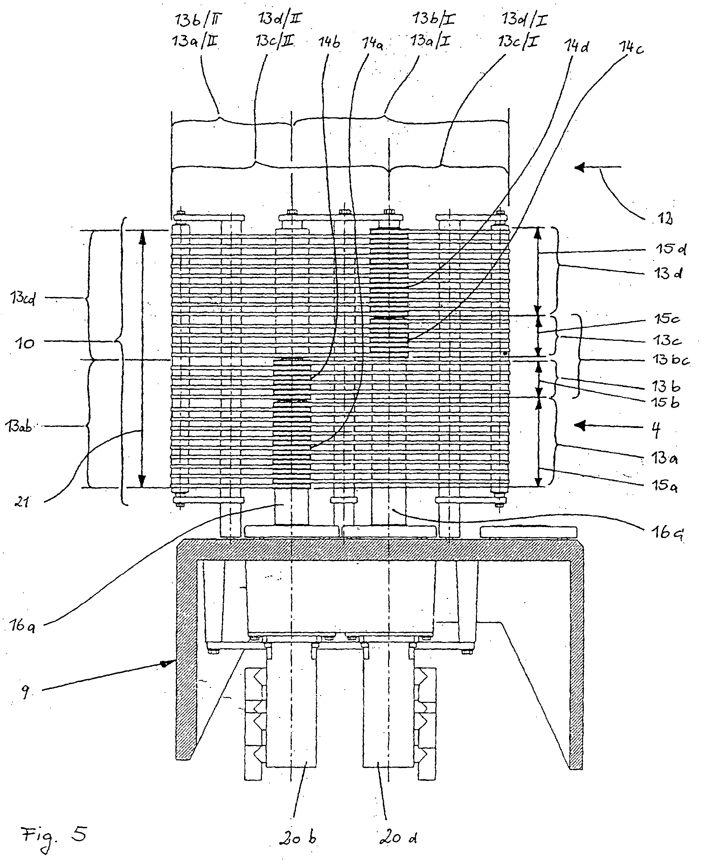

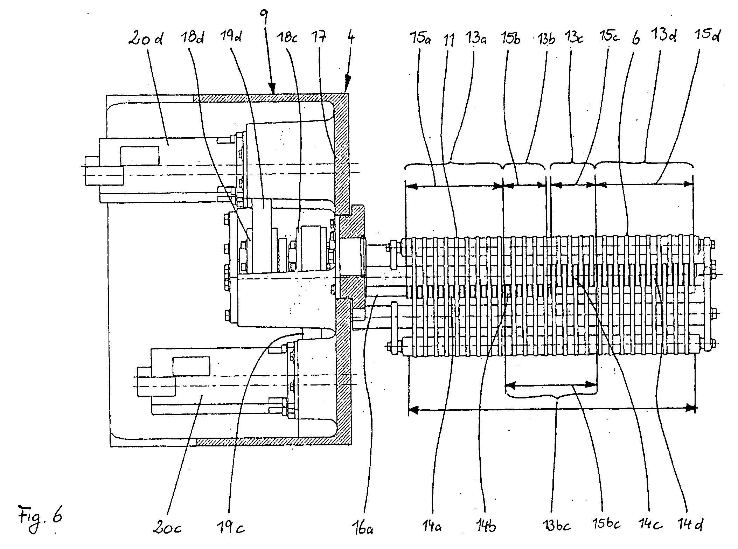

Wie insbesondere aus den Fig. 5 und 6 ersichtlich ist, betragen die Breiten 15b, 15c der beiden mittleren Bahnen 13b, 13c ungefähr die Hälfte der Breiten 15a, 15d der äußeren Bahnen 13a, 13d. Auf diese Weise ergibt sich ungefähr eine Dreiteilung der Gesamtbreite 21 sämtlicher vier Bahnen 13a bis 13d, wenn die beiden mittleren Bahnen 13b, 13c zu einer mittleren Bahn 13bc mit der Breite 15bc zusammengeschaltet werden.

Hingegen läßt sich eine Halbierung der Gesamtbreite 21 erreichen, wenn einerseits die Bahnen 13a, 13b zu einer Bahn 13ab und andererseits die Bahnen 13c und 13d zu einer Bahn 13c,d zusammengeschaltet werden. Schließlich ist auch der unabhängige Betrieb von sämtlichen vier Bahnen 13a bis 13d möglich, wobei in diesem Fall die beiden mittleren Bahnen 13b und 13c eine vergleichsweise geringe Breite aufweisen. Eine Nutzung der beiden kombinierten Bahnen 13ab und 13cd durch Synchronisation der Antriebsmotoren 20a und 20b einerseits und 20c und 20d andererseits wird dann durchgeführt, wenn zweireihig oder auch vierreihig (mit zwei Produktstapeln nebeneinander pro Reihe) gepackt werden soll. In diesem Fall kann die Weiche 2 die in Fig. 2 dargestellte Stellung beibehalten, sofern auf jeder Bahn 7a, 7b der Weiche 2 ein größerer oder zwei entsprechend kleinere Produktstapel - von der Schneideeinrichtung und der Wägeeinrichtung kommend - abgelegt werden.

Komplizierter ist der Fall des zweireihigen Schneidens, bei dem auf jeder Bahn 7a, 7b der Weiche 2 ein Scheibenpaket zur Ablage gelangt, und des anschließenden dreireihigen Verpackens in der Verpackungsmaschine. In diesem Fall müssen die jeweils von der Weiche 2 an die Rangiereinheit 4 übergebenen Produktstapel abwechselnd entweder an die Bahnen 13a und 13bc (Fig. 3a), die Bahnen 13bc und 13d (Fig. 3b) und die Bahnen 13a und 13d übergeben werden, um während mehrerer Zyklen auf der Oberfläche 11 der Rangiereinheit 4 die für die Verpackungsmaschine benötigte Stapelanordnung zu erzeugen. In dem von der Verpakkungsmaschine vorgegebenen Takt muß von der Rangiereinheit 4 ein Paket von drei nebeneinander angeordneten Scheibenstapeln erzeugt und zu demselben Zeitpunkt an die anschließende Fördereinrichtung 5 übergeben werden.

Der große Vorteil des Verfahrens und der Rangiereinheit 4 gemäß der Erfindung besteht darin, daß Änderungen in der Anzahl der nebeneinander in einer Packung liegenden Scheibenstapel bzw. Änderungen in der Anzahl der zeitgleich in der Schneideinrichtung abgeschnittenen Scheiben keinerlei Umbaumaßnahmen an der Rangiereinheit 4 erfordern. Vielmehr kann eine geänderte Aufteilung der Oberfläche 11 des Transportteils 10 der Rangiereinheit 4 allein im Wege einer geänderten Ansteuerung der vier Antriebsmotoren 20a bis 20d erfolgen. Diese geänderte Ansteuerung erfolgt rein softwaremäßig, da die hier beschriebene Aufschnittlinie über eine frei programmierbare Rechnersteuerung verfügt.

## Patentansprüche

1. Verfahren zum Betrieb einer Rangiereinheit (4) einer Transportvorrichtung (1) für Schneidgutportionen eines Lebensmittels, die von in Transportrichtung vorgelagerten (2) und nachgelagerten (5) Fördermitteln an die Rangiereinheit (4) übergeben und von dieser weg geführt werden, wobei die Rangiereinheit eine Mehrzahl von parallel nebeneinander verlaufenden Bahnen (13a-d) aufweist, die jeweils von mindestens einem über Umlenkwalzen (15a-d) geführten Zugmittel gebildet sind, und wobei jede Bahn von mindestens einer separaten Antriebseinrichtung (20a-d) angetrieben wird, **dadurch gekennzeichnet, daß** eine Schneidgutportion von mindestens zwei Bahnen gleichzeitig transportiert wird.

2. Verfahren nach Anspruch 1, **dadurch gekennzeichnet, daß** die Geschwindigkeit jeder Bahn unabhängig geregelt wird.

3. Verfahren nach Anspruch 1 oder 2, **dadurch gekennzeichnet, daß** Geschwindigkeiten benachbarter Bahnen, mit denen gemeinsam dieselbe Schneidgutportion transportiert wird, zumindest temporär unterschiedlich groß sind.

4. Rangiereinheit (4) einer Transportvorrichtung (1) für Schneidgutportionen eines Lebensmittels, wobei die Rangiereinheit (4) eine Mehrzahl von parallel nebeneinander verlaufenden Bahnen (13a bis 13d) aufweist, die jeweils von mindestens einem über Umlenkwalzen (15a bis 15d) geführten Zugmittel gebildet sind und jeweils einerseits von einem in Transportrichtung der Rangiereinheit (4) vorgelagerten Fördermittel mit Schneidgutportionen beschickbar sind, die andererseits an ein nachgelagertes Fördermittel (5) abgebbar sind, und wobei jede Bahn (13a bis 13d) von einer separaten Antriebseinrichtung (20a-d) antreibbar ist, **dadurch gekennzeichnet, daß** vier Bahnen (13a bis 13d) vorhanden sind, von denen die beiden mittleren Bahnen (13b und 13c) jeweils eine Breite (15b, 15c) aufweisen, die ungefähr der halben Breite (15a, 15d) der beiden äußeren Bahnen (13a, 13d) entspricht.

5. Rangiereinheit nach Anspruch 4, **dadurch gekennzeichnet, daß** die Antriebswalzen (16a, 16b und 16c, 16d) jeweils einer äußeren Bahn (13a, 13d) und der benachbarten mittleren Bahn (13b, 13c) koaxial zueinander angeordnet sind.

6. Rangiereinheit nach Anspruch 5, **dadurch gekennzeichnet, daß** eine Antriebswelle einer Antriebswalze (14b, 14c) einer mittleren Bahn (13b, 13c) durch die hohl ausgeführte Antriebswalze (14a, 14d) der benachbarten äußeren Bahn (13a, 13d) geführt ist.

7. Rangiereinheit nach Anspruch 6, **dadurch gekennzeichnet, daß** eine hohl ausgeführte Antriebswalze (14a, 14c) und eine durch diese geführte Antriebswelle jeweils mit einer Riemenscheibe (18a bis 18d) für einen von einem Servomotor antreibbaren Flachriemen (19) versehen ist.

8. Rangiereinheit nach Anspruch 7, **dadurch gekennzeichnet, daß** die hohl ausgeführten Antriebswalzen (14a, 14c) in horizontale Richtung versetzt zueinander angeordnet sind und sich die Servomotoren alle auf derselben Seite der Rangiereinheit (4) befinden.

9. Rangiereinheit nach Anspruch 8, **dadurch gekennzeichnet, daß** die Servomotoren, die auf koaxial zueinander angeordnete Riemenscheiben (18a, 18b und 18c, 18d) wirken, jeweils vertikal übereinander angeordnet sind.

10. Rangiereinheit nach einem der Ansprüche 4 bis 9, **dadurch gekennzeichnet, daß** jede Bahn (13a bis 13d) aus einer Mehrzahl von parallel zueinander verlaufenden und äquidistant zueinander angeordneten Bändchen (6) oder Riemchen aus einem gummielastischen Material besteht.

11. Rangiereinheit nach Anspruch 10, **dadurch gekennzeichnet, daß** jede Bahn (13a bis 13d) aus zwei in Transportrichtung hintereinander angeordneten Abschnitten (13a/I und 13a/II, 13b/I und 13b/II, 13c/I und 13c/II, 13d/I und 13d/II) besteht, die jeweils von einer gemeinsamen Antriebswalze (14a bis 14d) antreibbar sind, wobei auf der Antriebswalze (14a bis 14d) jeweils abwechselnd ein Bändchen (6) eines ersten Abschnitts (13a/I, 13b/I, 13c/I, 13d/I) und ein Bändchen (6) eines zweiten Abschnitts (13a/II, 13b/II, 13c/II, 13d/II) angeordnet ist.

## Claims

1. Method for operating a distributing unit (4) of a conveyor (1) for sliced foodstuffs which are passed from conveying means positioned ahead (2) and behind (5), as seen in the transport direction, to the distributing unit (4) and away from the latter, and the distributing unit comprises a plurality of parallel belts (13a-d) which are formed by at least one pulling means which is guided via diverting rollers (15a-d), and each belt is driven by at least one separate drive (20a-d), **characterised in that** sliced foodstuff is transported simultaneously by at least two belts.

2. Method according to Claim 1, **characterised in that** the speed of each belt is controlled independently.

3. Method according to Claim 1 or 2, **characterised in that** speeds of adjacent belts, by means of which the same sliced foodstuff is jointly transported, differ at least temporarily.

4. Distributing unit (4) of a conveyor (1) for sliced foodstuffs, and the distributing unit (4) comprises a plurality of belts (13a to 13d) which run parallel alongside each other and which are formed by at least one pulling means guided via diverting rollers (15a to 15d) and which are delivered sliced foodstuffs on the one hand by a conveying means upstream of the distributing unit (4), as seen in the transport direction, and which are on the other side passed on to a downstream conveying means (5), and each belt (13a to 13d) is driven by a separate drive (20a-d), **characterised in that** there are four belts (13a to 13d) of which the two middle belts (13b and 13c) have one respective width (15b, 15c) which equals approximately half the width (15a, 15d) of the two outer belts (13a, 13d).

5. Distributing unit according to Claim 4, **characterised in that** the drive rollers (16a, 16b and 16c, 16d) are arranged coaxially relative to an outer belt (13a, 13d) and the adjacent middle belt (13b, 13c).

6. Distributing unit according to Claim 5, **characterised in that** a driveshaft of a drive roller (14b, 14c) of a middle belt (13b, 13c) is passed through a drive roller (14a, 14d) of tubular design of the adjacent outer belt (13a, 13d).

7. Distributing unit according to Claim 6, **characterised in that** a tubular drive roller (14a, 14c) and a driveshaft which is passed through the latter are respectively provided with a belt pulley (18a to 18d) for a flat belt (19) which is driven by a servo motor.

8. Distributing unit according to Claim 7, **characterised in that** the tubular drive rollers (14a, 14c) are transposed in the horizontal direction, and the servo motors are all on the same side of the distributing unit (4).

9. Distributing unit according to Claim 8, **characterised in that** the servo motors which act on belt pulleys (18a, 18b and 18c, 18d), which are arranged coaxially relative to each other, are respectively arranged vertically above one another.

10. Distributing unit according to one of Claims 4 to 9, **characterised in that** each belt (13a to 13d) is composed of a plurality of little bands (6) or little belts of a rubber-elastic material which extend parallel and equidistantly relative to each other.

11. Distributing unit according to Claim 10, **characterised in that** each belt (13a to 13d) is composed of two sections (13a/I and 13a/II, 13b/I and 13b/II, 13c/I and 13c/II, 13d/I and 13d/II) which are respectively driven by a common driveshaft (14a to 14d), and on the drive roller (14a to 14d) is respectively alternately arranged a little band (6) of a first section (13a/I, 13b/I, 13c/I, 13d/I) and a little band (6) of a second section (13a/II, 13b/II, 13c/II, 13d/II).

## Revendications

1. Procédé pour faire fonctionner une unité de répartition (4) d'un dispositif de transport (1) pour des portions en tranches d'un aliment, lesquelles sont remises à l'unité de répartition (4) et en repartent par des moyens de transport disposés en amont (2) et en aval (5) de la direction de transport, l'unité de répartition présentant une pluralité de voies (13a-d) qui s'étendent parallèlement les unes à côté des autres et qui sont formées chacune par au moins un moyen de traction guidé par des cylindres déflecteurs (15a-d) et chaque voie étant entraînée par au moins une installation d'entraînement (20a-d) distincte, **caractérisé en ce qu'**une portion en tranches est convoyée simultanément par au moins deux voies.

2. Procédé selon la revendication 1 **caractérisé en ce que** la vitesse de chaque voie est réglée indépendamment.

3. Procédé selon la revendication 1 ou 2 **caractérisé en ce que** les vitesses de voies voisines avec lesquelles la même portion en tranches est convoyée sont au moins temporairement d'une grandeur différente.

4. Unité de répartition (4) d'un dispositif de transport (1) pour des portions en tranches d'un aliment dans laquelle l'unité de répartition (4) présente une pluralité de voies (13a-d) qui s'étendent parallèlement les unes à côté des autres et qui sont formées par au moins un moyen de traction guidé par des cylindres déflecteurs (15a-d) et à chaque fois d'une part peuvent être alimentées par un moyen de transport placé en amont de l'unité de répartition (4) en direction de transport et d'autre part peuvent être remises à un moyen de transport (5) placé en aval, chaque voie (13a à 13d) pouvant être entraînée par une installation d'entraînement (20a-d) distincte, **caractérisée en ce qu'**il existe quatre voies (13a à 13d) parmi lesquelles les deux voies médianes (13b et 13c) présentent à chaque fois une largeur (15b, 15c) qui correspond approximativement à la moitié de la largeur (15a, 15d) des deux voies extérieures (13a, 13d).

5. Unité de répartition selon la revendication 4 **caractérisée en ce que** les cylindres d'entraînement (16a, 16b et 16c, 16d) respectivement d'une des voies extérieures (13a, 13d) et de la voie médiane (13b et 13c) voisine sont placés coaxialement l'un par rapport à l'autre.

6. Unité de répartition selon la revendication 5 **caractérisée en ce qu'**un arbre d'entraînement d'un cylindre d'entraînement (14b, 14c) d'une voie méiane (13b et 13c) est guidé par le cylindre d'entraînement (14a, 14d) réalisé de façon creuse de la voie extérieure (13a, 13d) voisine.

7. Unité de répartition selon la revendication 6 **caractérisée en ce qu'**un cylindre d'entraînement (14a, 14c) réalisé de façon creuse et un arbre d'entraînement guidé à travers celui-ci est à chaque fois muni d'une poulie à courroie (18a à 18d) pour une courroie plate (19) qu'on peut entraîner par un servomoteur.

8. Unité de répartition selon la revendication 7 **caractérisée en ce que** les cylindres d'entraînement (14a, 14c) réalisés de façon creuse sont décalés l'un par rapport à l'autre en direction horizontale et que les servomoteurs se trouvent tous du même côté de l'unité de répartition (4).

9. Unité de répartition selon la revendication 8 **caractérisée en ce que** les servomoteurs, qui agissent sur les poulies à courroie (18a, 18b et 18c, 18d) placées coaxialement l'une par rapport à l'autre, sont à chaque fois disposés verticalement l'un au-dessus de l'autre.

10. Unité de répartition selon l'une des revendications 4 à 9 **caractérisée en ce que** chaque voie (13a à 13d) est composée d'une pluralité de petites voies (6) ou de petites courroies, en un matériau constitué de gomme élastique, qui s'étendent parallèlement l'une par rapport à l'autre et qui sont placées à équidistance l'une de l'autre.

11. Unité de répartition selon la revendication 10 **caractérisée en ce que** chaque voie (13a à 13d) est composée de deux segments (13a/I et 13a/II, 13b/I et 13b/II, 13c/I et 13c/II, 13d/I et 13d/II), placés l'un derrière l'autre en direction de transport, lesquels à chaque fois peuvent être entraînés par un cylindre d'entraînement (14a, 14d) commun, dans laquelle sont placées alternativement sur le cylindre d'entraînement (14a, 14d) une petite bande (6) d'un premier segment (13a/I, 13b/I, 13c/I, 13d/I) et une petite bande (6) d'un deuxième segment (13a/II, 13b/II, 13c/II, 13d/II).
